(19) Europäisches Patentamt

European Patent Office

Office européen des brevets

(11) **EP 1 017 626 B1**

(12) **FASCICULE DE BREVET EUROPEEN**

(45) Date de publication et mention
de la délivrance du brevet:
**04.12.2002 Bulletin 2002/49**

(21) Numéro de dépôt: **98951453.4**

(22) Date de dépôt: **22.09.1998**

(51) Int Cl.[7]: **C01G 49/10**

(86) Numéro de dépôt international:
**PCT/EP98/06046**

(87) Numéro de publication internationale:
**WO 99/016712 (08.04.1999 Gazette 1999/14)**

(54) **PROCEDE DE TRAITEMENT DES SOLUTIONS USEES DE DECAPAGE**

VERFAHREN ZUR AUFBEREITUNG VON ALTBEIZE

METHOD FOR TREATING WASTE PICKLING SOLUTIONS

(84) Etats contractants désignés:
**BE CH DE ES FR IT LI LU NL**

(30) Priorité: **26.09.1997 EP 97870145**

(43) Date de publication de la demande:
**12.07.2000 Bulletin 2000/28**

(73) Titulaire: **Galva Power Group N.V.**
**3900 Overpelt (BE)**

(72) Inventeurs:
• **WARICHET, David**
**B-1030 Bruxelles (BE)**
• **BOURGEOIS, Sabine**
**B-1040 Bruxelles (BE)**
• **VAN LIERDE, A.**
**B-1180 Bruxelles (BE)**
• **DE MAEYER, Patrick**
**B-4020 Liège (BE)**

(74) Mandataire: **Van Malderen, Joelle et al**
**Office Van Malderen,**
**Place Reine Fabiola 6/1**
**1083 Bruxelles (BE)**

(56) Documents cités:
**US-A- 4 591 489**

• **DATABASE WPI Section Ch, Week 7834 Derwent
Publications Ltd., London, GB; Class D15, AN
78-61360A XP002057717 & JP 53 082696 A
(DAIKIN IND LTD) , 21 juillet 1978**

## Description

### Objet de l'invention

La présente invention concerne un procédé de traitement de solutions usées de décapage en vue de l'obtention de solutions de chlorure ferreux suffisamment concentrées en fer total et appauvries en zinc et autres impuretés métalliques pour qu'elles puissent être recyclées dans de bonnes conditions économiques, notamment pour la fabrication de chlorure ferrique ou par des exploitants de station d'épuration d'eaux usées ou d'effluents.

L'invention porte en particulier sur le traitement des acides usés de décapage issus des usines de galvanisation à chaud, notamment la galvanisation à façon de différents types de pièces, la galvanisation de tubes, la galvanisation de fils, la galvanisation de coils, et notamment le traitement de solutions de décapage dont la composition correspond à 0,5-25 g/l Zn, 10-60 g/l HCl et 60-150 g/l $Fe^{tot}$.

### Arrière-plan technologique

Actuellement, les bains de décapage usés sur base chlorhydrique sont traités le plus souvent par des installations physico-chimiques et les boues générées sont ensuite conditionnées et mises en décharge, ce qui actuellement entraîne des nuisances et des coûts de plus en plus élevés.

Il serait donc intéressant de rendre les bains usés recyclables dans de bonnes conditions dans l'industrie minérale et particulièrement pour la production de composés de fer tels que le chlorure ferrique, le chlorure ferreux, le chlorosulfate ferrique, etc., ce qui impose à la fois l'obtention d'une teneur en fer suffisamment élevée et l'abaissement des teneurs en impuretés résiduaires sous des seuils fort bas.

La difficulté majeure résulte principalement dans la nécessité d'éliminer les métaux lourds présents dans les bains usés.

En galvanisation, il s'agit principalement du zinc et du plomb mais aussi du nickel, du cuivre, du chrome, de l'étain, de l'arsenic, du cadmium, etc. qui peuvent également être présents dans ces bains.

Le document US 4 591 489 décrit un traitement de solutions usées d'acide chlorhydrique contenant du fer et du zinc et de petites quantités de métaux lourds.

On provoque d'abord la réduction du fer trivalent en fer bivalent et la réduction de certains métaux lourds à l'état élémentaire. Ensuite, on poursuit la réduction des métaux lourds par du zinc et finalement, on extrait le chlorure de zinc par un solvant organique contenant un agent complexant du chlorure de zinc.

Les documents DATABASE WPI, Section Ch, Week 7834, Derwent Publications Ltd., London, GB; Class D15, AN 78-61330A, XP002057717 et JP 53 082 696 A (DAIKIN IND LTD), 21 juillet 1978, décrivent l'élimination de métaux lourds de solutions de chlorure de fer à l'aide de fer métallique ajouté à des solutions chlorhydrique ou sulfurique pour réduire le pH. On sépare ensuite les résidus de métaux lourds par filtration.

Ces techniques sont onéreuses et ne préconisent pas de solution pour un traitement efficace des métaux lourds.

L'invention vise à résoudre cette difficulté en proposant une technique à la fois économique et rentable et qui réduit fortement, voire supprime, les mises en décharge.

### Eléments caractéristiques de l'invention

Le procédé de l'invention se caractérise par au moins trois étapes opératoires successives, à savoir :

- une première étape de neutralisation de l'acide usé de décapage par réaction entre l'acide résiduel (HCl) et des oxydes ou hydroxydes de fer ($Fe_2O_3$, $Fe_3O_4$, FeOOH, $Fe(OH)_3$, ...) ou des carbonates ($Fe_2CO_3$, ...), selon des réactions du type :

$$3\,HCl + Fe(OH)_3 \rightarrow FeCl_3 + 3\,H_2O;$$

- une deuxième étape de réduction du fer ferrique ($Fe^{3+}$) présent dans les bains par du fer métal, selon une réaction du type :

$$2\,FeCl_3 + Fe \rightarrow 3\,FeCl_2,$$

et

- une troisième étape d'élimination des métaux lourds (en particulier $Zn^{2+}$, $Pb^{2+}$, $Sn^{2+}$, $As^{3+}$, $Cu^{2+}$, $Co^{2+}$, $Ni^{2+}$, $Cd^{2+}$, etc.) sous forme de sulfures par précipitation, selon une réaction de type :

$$ZnCl_2 + NaHS \rightarrow ZnS + HCl + NaCl$$

Il convient de noter que la première et la deuxième étapes constituent une procédure obligatoire préalable à la troisième étape. En effet, vu la présence d'inhibiteurs dans les effluents, on ne peut sans neutralisation traiter la solution par du fer métallique, par exemple sous forme de mitraille. Par contre, la réduction sur les mitrailles du $Fe^{3+}$ en $Fe^{++}$ n'est pas conditionnée par la présence de ces inhibiteurs, d'où l'originalité de consommer l'HCl en formant du $FeCl_3$ et de réduire $FeCl_3$ en $FeCl_2$, étant donné qu'il est nécessaire d'être en présence de $Fe^{++}$ pour précipiter les métaux lourds sans consommation excessive de $Na_2S$.

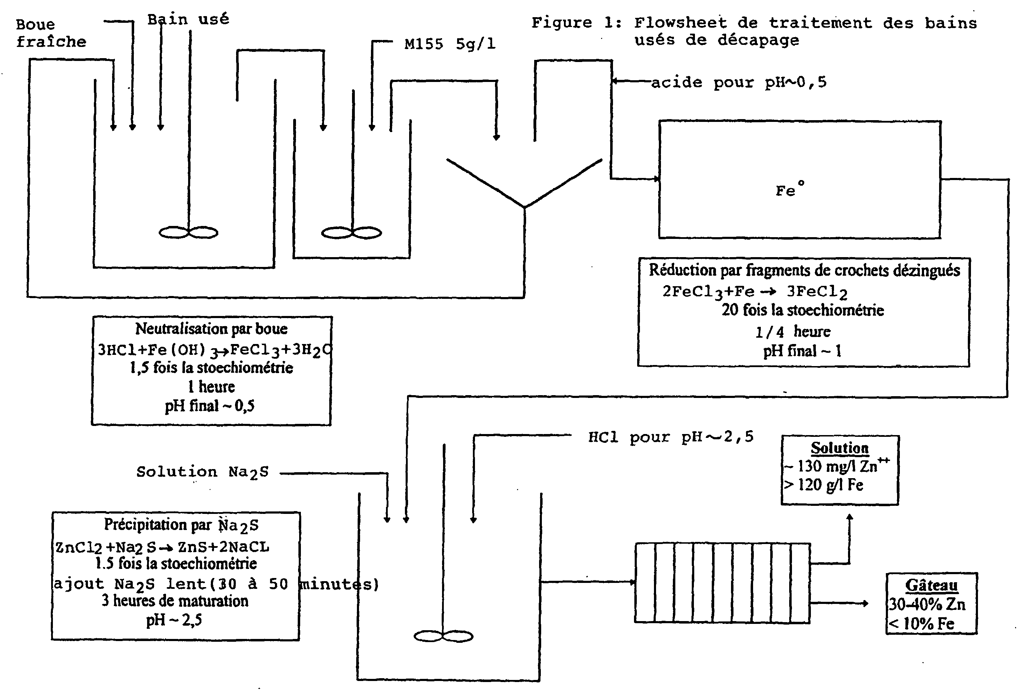

Ces différentes étapes opératoires sont illustrées dans la figure 1 annexée sous forme de schéma opératoire (flow sheet).

Les conditions opératoires de la première étape reposent sur l'utilisation d'une boue formée principalement d'hydroxyde et d'oxyde de fer en suspension dans l'eau, cette boue étant ajoutée en quantité suffisante pour neutraliser l'acidité libre de la solution usée de décapage, le produit résultant étant constitué essentiellement de chlorure ferrique. Une technique avantageuse pour réaliser cette opération est une lixiviation des boues par la solution d'acide qui peut être exécutée à la température ordinaire.

Une source avantageuse pour la boue de neutralisation est constituée par un gâteau d'hydroxyde de fer issu du traitement de boues de rinçage ou du flux de galvanisation, débarrassé de la majeure partie du chlorure d'ammonium de manière à ne pas polluer la solution de $FeCl_2$ par des ions $NH_4^+$ au-delà des limites admises.

A titre d'exemple, ceci peut être avantageusement réalisé en milieu aqueux par une réaction chimique entre le $NH_4Cl$ présent dans la boue et de la chaux ajoutée en léger excès de manière à décomposer le $NH_4Cl$ et dégager du $NH_3$ gazeux qui est ensuite capté par une solution d'HCl pour reformer du $NH_4Cl$ utilisable comme composant du flux. Ce traitement s'effectue de préférence à une température de l'ordre de 90 °C.

Les réactions visées compte tenu de la présence de $ZnCl_2$ dans la boue sont les suivantes :

$$2\ NH_4Cl + Ca(OH)_2 \rightarrow 2\ NH_3 \nearrow + CaCl_2 + 2\ H_2O$$

$$ZnCl_2 + Ca(OH)_2 \rightarrow Zn(OH)_2 + CaCl_2$$

Le traitement est réalisé de préférence sur une solution de décapage usée titrant au moins 50 g/l HCl, avec une boue provenant du déferrage du flux utilisée contenant maximum 5% $NH_4Cl$ sur humide. Dans ce cas, en effet, en prétraitant la boue à 90 °C par une quantité de chaux correspondant à 1,25 fois la stoechiométrie par rapport à ce qui est nécessaire pour transformer le $NH_4Cl$ et le $ZnCl_2$, la teneur en $NH_4Cl$ de la boue serait ramenée à 0,5%, ce qui est suffisant pour que la teneur $NH_4^+$ de la solution neutralisée soit inférieure à 500 mg/l. Dans ce cas, la teneur Ca de cette solution atteindrait environ 9 g/l.

Lors de ce prétraitement, 80% du $NH_4Cl$ peut être récupéré après absorption des vapeur d'ammoniac dans une solution de HCl. La boue sera ensuite de préférence filtrée, mais non lavée, et que le filtrat sera recyclé continuellement à l'étape de prétraitement, de manière à ce que la totalité du $CaCl_2$ formé se retrouve finalement sans la solution imprégnant le gâteau et ensuite dans la solution neutralisée. Dans les conditions générales précitées, l'apport de $CaCl_2$ à cette solution ne sera pas préjudiciable.

La neutralisation de la première étape doit être menée jusqu'à une acidité libre résiduelle imposée par le bon fonctionnement de la réduction ultérieure du $Fe^{3+}$ dans la deuxième étape. Il faut notamment éviter que lors de la réduction il y ait précipitation du $Fe^{3+}$ par manque d'acidité ou que l'acidité reste trop élevée, ce qui engendrerait la formation d'$H_2S$ lors de la précipitation ultérieure du zinc dans la troisième étape. L'exemple 1 qui suit illustre la façon d'opérer.

Avantageusement, on utilise un excès de boue, mais ceci impose d'éliminer cet excès après la neutralisation de manière à éviter toute présence de solide lors de la réduction de la deuxième étape et de recycler à l'étape de neutralisation ce qui n'a pas réagi. L'exemple 1 illustre une technique préconisée.

Le moyen choisi pour récupérer les matières solides résiduelles de l'excès de boue de neutralisation peut être une simple décantation après floculation notamment par du Magnafloc 155. L'underflow du décanteur est recyclé à la cuve de neutralisation. En procédant de la sorte, on finit par utiliser totalement les hydroxydes de fer mis en jeu et on économise l'investissement d'un filtre. La présence de solution imprégnante dans l'underflow du décanteur ne perturbera en outre en aucune manière l'étape de neutralisation. Tout au plus, cela entraînera une légère augmentation du volume de la cuve de neutralisation, mais sans aucune dilution. L'exemple 2 illustre cette opération.

Le fer métal utilisé dans la deuxième étape peut provenir de tournures, de scraps, de morceaux de fer divers.

Dans la deuxième étape, le fer métal ajouté devrait être alimenté selon la théorie en proportions définies par la quantité de $Fe^{3+}$ initiale de la solution résultant de la première étape, mais en pratique, la deuxième étape du procédé s'effectue de préférence en recourant à de grands excès de fer par rapport à la stoechiométrie, ce qui permet d'arriver alors à une réaction rapide. On opère généralement à la température ordinaire. L'exemple 3 illustre cette opération.

La troisième étape de traitement des bains usés de décapage consiste à purifier la solution en éliminant le zinc présent avec le rendement le plus élevé possible.

La source des sulfures ajoutés dans la troisième étape peut être :

- $H_2S$,
- les sulfures alcalins : $Na_2S$, $K_2S$, ...
- les hydrosulfures alcalins : NaHS, KHS, ...
- les sulfures alcalino-terreux : CaS, BaS, ...
- le sulfure de fer : FeS
- les polysulfures : $Na_2S_2$, ...
- les sels de l'acide xanthique : $C_3H_2OKS_2$
- d'autres sulfures organiques

Dans cette troisième étape se produit la précipitation du zinc et de la plupart des impuretés sous forme de sulfures. Dans ce cas, les conditions opératoires (pH, temps, excès de sulfure) doivent être bien choisies de manière à limiter la formation d'$H_2S$ tout en précipitant quasi totalement le zinc et les autres métaux lourds mais avec le minimum de fer.

Selon les conditions opératoires déterminées, il convient de préférence de réaliser la précipitation du zinc et autres métaux à un pH constant compris entre 2 et 3 si on veut limiter le dégagement d'$H_2S$. Cette précipitation doit en outre être réalisée lentement avec une solution de $Na_2S$ assez concentrée (150 g/l) pour éviter toute dilution excessive et donc maintenir une concentration suffisante en fer dans la solution. L'exemple 4 illustre la technique préconisée.

## Exemple 1 : neutralisation de bains de décapage usés

La solution de décapage usée traitée présente la composition suivante :

$H^-$ : 2,72 g/l
pH : 0,43
$Fe^{tot}$ : 108 g/l
$Fe^{++}$: 100 g/l
$Zn^{++}$ : 8,86 g/l

La neutralisation a été réalisée par une boue titrant 25,65% Fe, 49,26% $H_2O$, 0,83% $NH_4Cl$ et 0,37% Zn. Les essais de neutralisation ont eu pour objet de :

- préciser le pH de fin de neutralisation à atteindre pour éviter tout problème lors de la réduction ultérieure; et
- définir les conditions opératoires les plus favorables, notamment la quantité de boue à mettre en jeu et le temps de réaction pour arriver à ce pH en travaillant à température ambiante.

Lors de ces essais, on a toujours réalisé la réduction durant 15 minutes en soumettant la solution neutralisée à l'action d'une masse importante de fils d'accrochage dézingués et déchiquetés à moins de 20 mm.

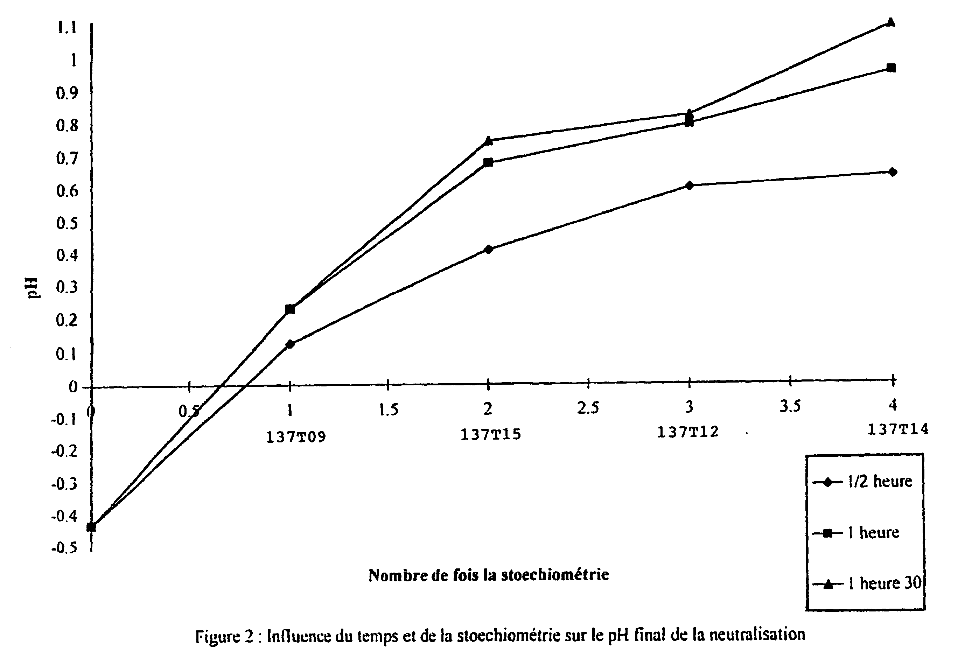

Les conditions opératoires et les résultats de ces essais sont donnés au tableau 1. L'évolution du pH au cours de la neutralisation en fonction du temps de réaction et de la masse de boue utilisée, exprimée en nombre de fois la stoechiométrie nécessaire pour neutraliser tout l'acide libre, est de plus donnée à la figure 2 en annexe.

On peut tirer de ces essais les conclusions suivantes :

- le pH variant de façon non négligeable lors de l'étape de réduction, il est nécessaire d'arrêter la neutralisation à une valeur de pH voisine de 0,5 si on veut maintenir en fin de réduction un pH voisin de 1;
- les courbes de la figure 2 correspondant à un temps de réaction d'une heure ou une heure et demi présentent une évolution tout à fait comparable alors que la courbe relative à un temps plus court (1/2 heure) est nettement plus basse;

- différents cas sont possibles pour arriver à l'objectif visé :

  - soit travailler avec 1,5 fois la stoechiométrie pendant 1 heure; si dans ce cas, le temps était plus long, il n'y aurait pas de modification sensible du pH;
  - soit travailler avec 2 fois la stoechiométrie pendant 1/2 heure seulement. Notons que le recours à une neutralisation aussi rapide n'entraînerait guère de perturbations notables si l'excès de boue était plus important (2,5 ou même 3 fois la stoechiométrie).

Si ces deux manières de travailler sont assez équivalentes du point de vue neutralisation, il n'en va pas de même au niveau de l'effet de dilution de la solution par l'eau imprégnant les boues. On choisira donc d'utiliser plutôt 1,5 fois la stoechiométrie durant 1 heure, ce qui permet de conserver un pH final qui ne varie pas trop si la boue reste plus longtemps en contact avec l'acide, et de maintenir la concentration fer de la solution à un niveau plus élevé.

En neutralisant durant 1 heure un litre d'acide par 1,5 fois la quantité stoechiométrique de boue, on obtient en fait une solution dont la teneur $H^+$ est de 0,2 g/l (pH = 0,54). Les teneurs $Fe^{tot}$ et $Fe^{2+}$ s'élèvent à respectivement 131 et 97,5 g/l.

### Exemple 2: floculation de l'excès de boue résiduaire après neutralisation de la solution de décapage

Plusieurs essais de décantation ont été effectués à partir de la solution acide à 100 g/l HCl neutralisée durant 1 heure avec 1,5 fois la stoechiométrie de boues de manière à déterminer la quantité exacte de floculant à ajouter.

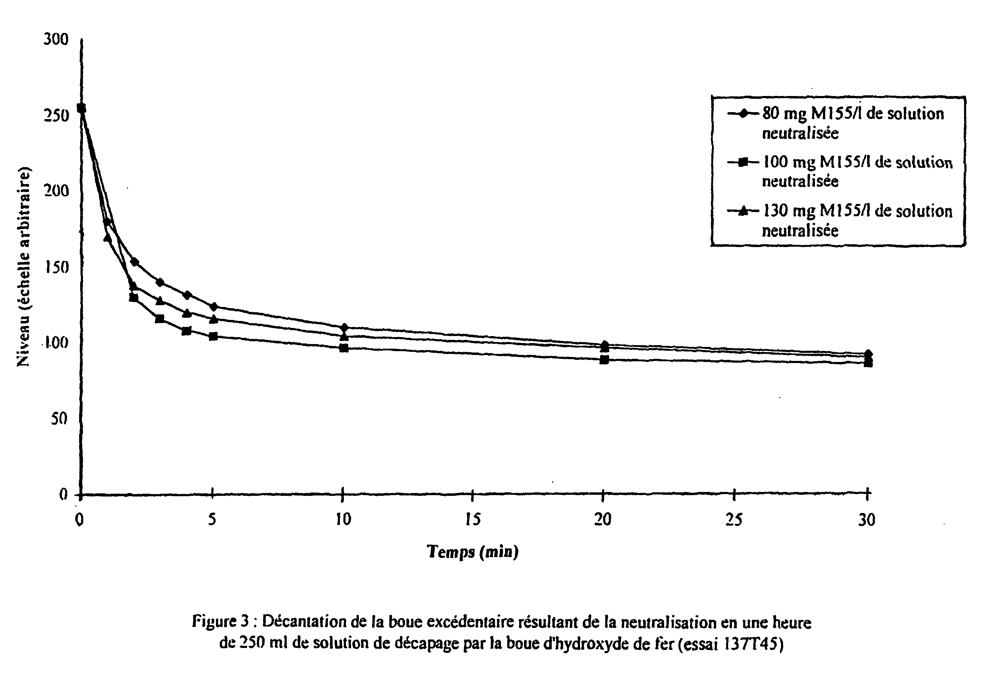

Les résultats obtenus en traitant 250 ml de solution usée neutralisée à pH 0,5 sont repris à la figure 3 en annexe. On y remarque qu'après 20 à 30 minutes de décantation en batch, la pulpe se sépare en deux : environ 2/3 du volume est une solution limpide apte à la réduction le 1/3 restant est une pulpe épaisse contenant environ 270 g/l de solide qui peut être recyclée.

Cette étape peu coûteuse et extrêmement rapide, puisqu'après quelques minutes l'overflow est déjà limpide, paraît donc judicieuse pour, d'une part fournir à l'étape de réduction une solution limpide et d'autre part, recycler la boue qui n'a pas réagi.

Il peut être utile de prévoir, après cette étape, une régulation de pH de manière à corriger ce dernier si la neutralisation a été trop forte ou si elle s'est poursuivie lors de la décantation. De cette manière, le pH de la solution à réduire pourrait toujours être fixé à sa valeur optimale de 0,5.

### Exemple 3 : réduction du $Fe^{3+}$

Quelques essais ont été réalisés ainsi, les résultats les plus significatifs ont été obtenus en utilisant un excès de fer métal correspondant à 20 fois la stoechiométrie, c'est-à-dire dans notre cas 2 kg de fragments par litre d'acide traité. Dans ces conditions, la réaction est très rapide et se déroule en 1/4 d'heure comme le montre le tableau 2.

### Exemple 4 : élimination du zinc et d'autres métaux lourds

Un premier essai a été effectué avec une quantité de $Na_2S$ correspondant à 1,5 fois la stoechiométrie. Le précipitant a été ajouté en 30 minutes à l'aide d'une pompe doseuse. Le précipité a mûri ensuite durant 3 heures dans son milieu. Il a finalement été filtré et lavé à l'eau déminéralisée. Les résultats détaillés sont présentés au tableau 3.

Quant au gâteau de ZnS, dont le poids correspond 7,9 g pour 430 ml de solution traitée, il présente la composition suivante sur sec :

$Fe^{tot}$ : 9,66%
Zn : 37,2%
$S^{tot}$ : 34,4%
Cl : 4,49%
$S^o$ : 14,76%

A partir de tous ces résultats, il est possible de calculer les bilans soufre pour évaluer la perte sous forme d'$H_2S$. la quantité de soufre apportée peut être estimée par deux méthodes :

- à partir du $Na_2S$ ajouté, soit 2,84 g de S

- par bilan sur le $Na^+$ retrouvé en solution, soit 2,86 g de S

**EP 1 017 626 B1**

La quantité de soufre retrouvée dans le précipité sous les différentes formes correspond à :

| | | |
|---|---|---|
| ZnS | 1,44 g de S | 50,73% |
| FeS | 0,12 g de S | 4,15% |
| S° | 1,17 g de S | 41,06% |
| Total : | 2,72 g de S | |

Si l'on se base sur l'apport de soufre estimé à partir du $Na_2S$ ajouté, la perte de S sous forme de $H_2S$ serait de 0,12 g, soit 4,06%. On constate que la perte d'$H_2S$ est tout à fait raisonnable et que la concentration en Zn de la solution a pu être abaissée en dessous de 130 mg/l. Les résultats obtenus sont détaillés au tableau 4.

Ces exemples correspondent à des opérations réalisées en "batches" à l'échelle du laboratoire. Le passage en régime continu permet d'atteindre des valeurs de teneur résiduelle en zinc de l'ordre de 50 mg/l.

Le gâteau recueilli (8,8 g sec pour 410 ml de solution traitée) présente les caractéristiques chimiques suivantes :

$Fe^{tot}$ : 6,35%
Zn : 40,78%
$S^{tot}$ : 34,7%
Cl : 2,28%
$Na^+$ : 0,06%
S° : 13,2%

Le calcul du bilan soufre montre à nouveau que :

- la quantité de soufre apportée :

  - à partir du $Na_2S$ ajouté    : 3,25 g de S
  - par bilan sur le $Na^+$ retrouvé    : 3,18 g de S

- la quantité de S retrouvée sous les différentes formes dans le gâteau :

| | | |
|---|---|---|
| ZnS | 1,76 g de S | 54,09% |
| FeS | 0,14 g de S | 4,29% |
| S° | 1,16 g de S | 35,7106% |

Le total du S retrouvé est donc de 3,06 g, ce qui représente 94,09% du soufre introduit sous forme de $Na_2S$. La perte de soufre (0,19 g) correspond dès lors à 5,91%.

En augmentant la masse de $Na_2S$ mise en jeu, on n'a guère amélioré la précipitation du zinc (120 mg au lieu de 130). Pour arriver en dessous de 1 00 mg/l dans une solution aussi riche en fer, il faudrait dès lors accroître encore nettement l'ajout de $Na_2S$, mais alors on provoquerait une dilution préjudiciable de la solution de fer. De plus, le dégagement d'$H_2S$ serait plus important.

Il convient de noter que lors de la précipitation du Zn, d'autres métaux lourds précipitent aussi, notamment le cuivre, le cobalt et le plomb ainsi que le montrent les résultats des analyses chimiques reprises au tableau 5.

Dans le mémoire descriptif et dans les revendications, la référence à trois étapes opératoires consécutives signifie que ces trois étapes sont mises en oeuvre l'une après l'autre dans l'ordre indiqué mais ceci n'exclut pas que des étapes intercalaires, notamment des étapes d'épuration, de concentration ou tout autre type de traitement puissent être intercalées entre les différentes étapes.

Bien qu'on ait décrit des formes d'exécution particulièrement préférées de l'invention, en particulier en référence à des exemples spécifiques d'exécution, il doit être bien entendu que de nombreuses variantes opératoires restent possibles dans le cadre de l'invention tel qu'il est défini par les revendications qui suivent.

Tableau 1 :

| Essais de neutralisation | | | | | |
|---|---|---|---|---|---|
| Conditions (*) | Temps neutral. (min) | pH final neutral. | Temps réduction (min) | pH final réduction | $Fe^{tot} = Fe^{++}$ (g/l) |
| 1 | 60 | 0,2 | 15 | 0,5 | 150 |
| 1,5 | 60 | 0,5 | 15 | 1,05 | 160 |
| 2 | 30 | 0,5 | 15 | 0,7 | 135 |
| | 60 | 1 | 15 | 1,3 | 145 |
| | 180 | 1,05 | 15 | 1,9 | 145 |
| 3 | 300 | 1,5 | 30 | 2,3 | 135 |
| 4 | 120 | 1,3 | 15 | 1,9 | 120 |

*: la condition est exprimée en nombre de fois la stoéchiométrie

Le « Magnafloc 155 » est une marque commerciale déposée pour un polyélectrolyte anionique. C'est un floculant connu de l'homme de l'art pour le traitement des eaux résiduaires.

Tableau 2 :

| Essai de réduction de $Fe^{3+}$ en $Fe^{2+}$ avec une quantité de fragments correspondant à 20 fois la stoéchiométrie | | | | |
|---|---|---|---|---|
| | $H^+$ (g/l) | pH | $Fe^{tot}$ (g/l) | $Fe^{2+}$ (g/l) |
| Acide de départ | 2,72 | -0,43 | 108 | 100 |
| Après neutralisation optimale | 0,29 | 0,54 | 146 | 135 |
| Après réduction 15 min | 0,09 | 1,05 | 163 | 163 |

**Tableau 3 : Essai de précipitation du Zn par Na$_2$S (1,5 fois la stoéchiométrie)**

| | Temps (min) | H$^+$ (g/l) | pH | Fe$^{tot}$ (g/l) | Fe$^{2+}$ (g/l) | Zn$^{2+}$ (g/l) | Na$^+$ (g/l) | η précipitation (%) |
|---|---|---|---|---|---|---|---|---|
| Solution réduite | 0 | 0,09 | 1,05 | 163 | 153 | 8,95 | 0,13 | - |
| Après ajout du Na$_2$S | 30 | - | - | 143 | 137 | 0,18 | - | - |
| Maturation | 60 | - | - | 153 | 149 | 0,16 | - | - |
| | 90 | - | - | 155 | 140 | 0,15 | - | - |
| | 120 | - | - | 145 | 138 | 0,15 | - | - |
| | 150 | - | - | 140 | 136 | 0,14 | - | - |
| | 180 | - | - | 143 | 140 | 0,14 | - | - |
| | 210 | - | 2,24 | 148 | 144 | 0,13 | 8,31 | 98,87 |

EP 1 017 626 B1

## Tableau 4 : Essai de précipitation du Zn par Na₂S (1.8 fois la stoéchiométrie)

| | Temps (min) | H⁺ (g/l) | pH | Fe$^{tot}$ (g/l) | Fe$^{2+}$ (g/l) | Zn$^{2+}$ (g/l) | Na⁺ (g/l) | η précipi-tation (%) |
|---|---|---|---|---|---|---|---|---|
| Solution réduite | 0 | 0,16 | 0,80 | 155 | 155 | 8,33 | < 0,01 | - |
| Après ajout du Na₂S | 50 | - | - | 140 | 140 | 0,18 | - | - |
| Maturation | 110 | - | - | 139 | 138 | 0,12 | - | - |
| | 170 | - | - | 134 | 133 | 0,12 | - | - |
| | 230 | - | 2,31 | 1415 | 140 | 0,12 | 9,16 | 98,53 |

## Tableau 5 : Précipitation des métaux lourds avec le zinc

| | Cu (mg/l) | Ni (mg/l) | Co (mg/l) | Cr (mg/l) | Mn (mg/l) | Pb (mg/l) |
|---|---|---|---|---|---|---|
| Après neutralisation | 165 | 78 | 5,9 | 130 | 575 | 160 |
| Après précipitation (1,8 fois stoéchiométrie) | < 10 | 85 | 3,1 | 103 | 585 | < 10 |

EP 1 017 626 B1

**Revendications**

1. Procédé de traitement de solutions usées de décapage en vue de l'obtention de solutions de chlorure ferreux concentrées en fer total et appauvries en zinc et autres impuretés métalliques par rapport à la solution de départ, **caractérisé en ce qu'**il comporte au moins trois étapes opératoires successives :

   - une première étape de neutralisation de l'acide usé de décapage par réaction entre l'acide résiduel constitué essentiellement de HCl et des oxydes ou hydroxydes de fer tels que $Fe_2O_3$, $Fe_3O_4$, FeOOH, $Fe(OH)_3$;
   - une deuxième étape de réduction du fer ferrique ($Fe^{3+}$) présent dans les bains par du fer métal; et
   - une troisième étape d'élimination des métaux lourds, en particulier $Zn^{2+}$, $Pb^{2+}$, $Sn^{2+}$, $As^{3+}$, $Cu^{2+}$, $Co^{2+}$, $Ni^{2+}$, $Cd^{2+}$ sous forme de sulfures par précipitation.

2. Procédé selon la revendication 1, **caractérisé en ce que** la neutralisation de l'acide usé dans la première étape est réalisée à l'aide d'une boue de neutralisation constituée par un gâteau d'hydroxyde de fer issu du traitement de flux de galvanisation ou de bains de rinçage.

3. Procédé selon la revendication 2, **caractérisé en ce que** l'on procède à une réduction préalable de la teneur de ladite boue de neutralisation en chlorure d'ammonium à une quantité inférieure à 500 mg/l en milieu aqueux.

4. Procédé selon la revendication 3, **caractérisé en ce que** ladite réduction préalable de ladite boue de neutralisation est réalisée par une réaction chimique entre le $NH_4Cl$ présent dans la boue et de la chaux ajoutée en léger excès en dégageant du $NH_3$ gazeux qui est ensuite capté par une solution d'HCl pour reformer du $NH_4Cl$ utilisable comme composant du flux.

5. Procédé selon l'une quelconque des revendications précédentes, **caractérisé en ce que** la neutralisation de la première étape est menée jusqu'à l'acidité libre résiduelle permettant la réduction ultérieure du $Fe^{3+}$ dans la deuxième étape.

6. Procédé selon l'une quelconque des revendications précédentes, **caractérisé en ce que** l'on utilise un excès de boue par rapport à la stoechiométrie, on élimine cet excès après la neutralisation de manière à éviter toute présence de solide lors de la réduction de la deuxième étape et on recycle à l'étape de neutralisation ce qui n'a pas réagi.

7. Procédé selon la revendication 6, **caractérisé en ce que** les matières solides résiduelles de l'excès de boue de neutralisation sont récupérées par une décantation après floculation.

8. Procédé selon l'une quelconque des revendications précédentes, **caractérisé en ce que** dans la deuxième étape, le fer métal ajouté est en excès par rapport à la quantité de $Fe^{3+}$ initiale résultant de la solution résultant de la première étape.

9. Procédé selon la revendication 8, **caractérisé en ce que** le fer métal utilisé dans la deuxième étape provient de tournures, de scraps, de morceaux de fer divers.

10. Procédé selon l'une quelconque des revendications précédentes, **caractérisé en ce que** la précipitation du zinc et de la plupart des impuretés à l'aide de $Na_2S$ ou équivalent dans cette troisième étape se produit dans des conditions opératoires (pH, temps, excès de sulfure) choisies de manière à précipiter quasi totalement le zinc et les autres métaux lourds.

11. Procédé selon la revendication 10, **caractérisé en ce que** la source des sulfures ajoutés dans la troisième étape est :

    - $H_2S$,
    - les sulfures alcalins tels que $Na_2S$, $K_2S$
    - les hydrosulfures alcalins tels que NaHS, KHS
    - les sulfurés alcalino-terreux tels que CaS, BaS
    - le sulfure de fer : FeS
    - les polysulfures tels que $Na_2S_2$
    - les sels à base d'acide xanthique
    - d'autres sulfures organiques.

**12.** Procédé selon l'une quelconque des revendications précédentes, **caractérisé en ce que** l'on réalise la précipitation du zinc et autres métaux à un pH constant compris entre 2 et 3 en vue de limiter le dégagement d'$H_2S$, de maximiser le rendement de la précipitation du zinc et de minimiser celui du fer, par addition lente d'une solution de $Na_2S$.

**Patentansprüche**

**1.** Verfahren zur Aufbereitung von Altbeizen, um konzentrierte Eisen(II)-chloridlösungen zu erhalten, die im Vergleich zur anfänglichen Lösung an totalem Eisen angereichert und an Zink und anderen metallischen Verunreinigungen verarmt sind, **dadurch gekennzeichnet, daß** es mindestens drei aufeinanderfolgende operative Stufen umfaßt;

- eine erste Stufe zur Neutralisation der Altbeizesäure durch Reaktion zwischen der residuellen im wesentlichen aus HCl bestehenden Säure und den Oxiden oder Hydroxiden des Eisens, wie $Fe_2O_3$, $Fe_3O_4$, FeOOH, Fe$(OH)_3$;
- eine zweite Stufe zur Reduktion des in den Bädern anwesenden Eisens(III) ($Fe^{3+}$) durch metallisches Eisen ; und
- eine dritte Stufe zur Entfernung der Schwermetalle, insbesondere von $Zn^{2+}$, $Pb^{2+}$, $Sn^{2+}$, $As^{3+}$, $Cu^{2+}$, $Co^{2+}$, $Ni^{24}$, $Cd^{2+}$ in der Form von Sulfiden durch Fällung.

**2.** Verfahren gemäß Anspruch 1, **dadurch gekennzeichnet, daß** die Neutralisation der Altbeizesäure im Verlaufe der ersten Stufe mit Hilfe eines Neutralisierungsschlammes, bestehend aus einem Eisenhydroxidkuchen, der von einer Behandlung eines Galvanisationsstromes oder von Spülungsbädern stammt, durchgeführt wird.

**3.** Verfahren gemäß Anspruch 2, **dadurch gekennzeichnet, daß** zuvor eine Verminderung des Ammoniumchloridgehaltes des besagten Neutralisierungsschlammes bis zu einem Gehalt von weniger als 500 mg/l in der wässerigen Lösung stattfindet.

**4.** Verfahren gemäß Anspruch 3, dadurch gekerimzeichnet, daß die besagte vorweggenommene Verminderung des besagten Neutralisierungsschlammes durch eine chemische Reaktion zwischen dem im Schlamm vorhandenen $NH_4Cl$ und dem in leichten Überschuß zugegebenen Kalk unter Freisetzung von gasförmigem $NH_3$ durchgeführt wird, wobei das $NH_3$ dann durch eine Lösung von HCl eingefangen wird, um erneut $NH_4Cl$ zu bilden, das als Komponente des Stromes benutzt werden kann.

**5.** Verfahren gemäß irgendeinem der vorhergehenden Ansprüche, **dadurch gekennzeichnet, daß** die Neutralisation in der ersten Stufe bis zu einem residuellen Gehalt an freier Säure durchgeführt wird, welcher die spätere Reduktion des $Fe^{3+}$ in der zweiten Stufe erlaubt.

**6.** Verfahren gemäß irgendeinem der vorhergehenden Ansprüche, **dadurch gekennzeichnet, daß** ein Überschuß an Schlamm im Vergleich zur Stöchiometrie verwendet wird, dieser Überschuß nach der Neutralisation auf solche Weise eliminiert wird, daß jegliche Anwesenheit von Feststoff während der Reduktion der zweiten Stufe vermieden wird, und daß das, was nicht reagiert hat, während der Neutralisationsstufe wiederverwendet wird.

**7.** Verfahren gemäß Anspruch 6, **dadurch gekennzeichnet, daß** die residuellen Feststoffe des Schlammüberschusses aus der Neutralisation durch Dekantieren nach Ausflockung zurückgewonnen werden.

**8.** Verfahren gemäß irgendeinem der vorhergehenden Ansprüche, **dadurch gekennzeichnet, daß** in der zweiten Stufe das zugesetzte metallische Eisen im Vergleich zur anfänglichen Menge an $Fe^{3+}$, die sich aus der von der ersten Stufe herrührenden Lösung ergibt, im Überschuß anwesend ist.

**9.** Verfahren gemäß Anspruch 8, **dadurch gekennzeichnet, daß** das in der zweiten Stufe benutzte metallische Eisen von Drehspänen, Schrott, verschiedenen Eisenstücken herrührt.

**10.** Verfahren gemäß irgendeinem der vorhergehenden Ansprüche, **dadurch gekennzeichnet, daß** die Fällung von Zink und den meisten der Verunreinigungen mit Hilfe von $Na_2S$ oder Entsprechenden in dieser dritten Stufe unter operative Bedingungen (pH, Zeit, Sulfidüberschuss) abläuft, so daß das Zink und die anderen Schwermetalle quasi vollständig gefällt werden.

**11.** Verfahren gemäß Anspruch 10, **dadurch gekennzeichnet, daß** die Quelle der in der dritten Stufe zugesetzten

Sulfide aus :

- H$_2$S,
- Alkalisulfiden, wie Na$_2$S, K$_2$S,
- alkalischen Hydrosulfiden, wie NaHS, KHS,
- Sulfiden von Erdalkalimetallen, wie CaS, BaS,
- Sulfid des Eisens : FeS,
- Polysulfiden, wie Na$_2$S$_2$,
- Salzen auf Xanthensäurebasis,
- anderen organischen Sulfiden

besteht.

12. Verfahren gemäß irgendeinem der vorhergehenden Ansprüche, **dadurch gekennzeichnet, daß** die Fällung von Zink und anderen Metallen bei einem konstanten zwischen 2 und 3 liegenden ph-Wert durchgeführt wird, um die Freisetzung von H$_2$S zu begrenzen, die Ausbeute der Zinkfällung zu maximieren und diejenige von Eisen zu minimieren, durch langsames Zusetzen einer Lösung von Na$_2$S.

**Claims**

1. A method for treating waste pickling solutions so as to obtain ferrous chloride solutions being concentrated in total iron and depleted in zinc and other metal impurities based on the starting solution, **characterized in that** it comprises at least three successive operating steps:

   - a first step of neutralizing the waste pickling acid by reaction between the residual acid essentially consisting of HCl and iron oxides or hydroxides such as Fe$_2$O$_3$, Fe$_3$O$_4$, FeOOH, Fe(OH)$_3$;
   - a second step of reducing the ferric iron (Fe$^{3+}$) being present in the baths by metal iron; and
   - a third step of removing heavy metals, more particularly Zn$^{2+}$, Pb$^{2+}$, Sn$^{2+}$, As$^{3+}$, Cu$^{2+}$, Co$^{2+}$, Ni$^{2+}$, Cd$^{2+}$ in the form of sulphides through precipitation.

2. A method according to claim 1, **characterized in that** the neutralization of the waste acid in the first step is performed with the help of neutralization sludge comprising an iron hydroxide cake derived from the processing of galvanization streams or rinsing baths.

3. A method according to claim 2, **characterized in that** a preliminary reduction of the ammonium chloride content is carried out in said neutralization sludge to a lower amount than 500 mg/l in an aqueous medium.

4. A method according to claim 3, **characterized in that** said preliminary reduction of said neutralization sludge is achieved through a chemical reaction between the NH$_4$Cl being present in the sludge and the lime being added in a slight excess while releasing gaseous NH$_3$ which is subsequently captured by a HCl solution so as to regenerate NH$_4$Cl being useable as a stream component.

5. A method according to any one of the preceding claims, **characterized in that** the neutralization in the first step is conducted until the residual free acidity allowing the subsequent reduction of Fe$^{3+}$ in the second step.

6. A method according to any one of the preceding claims, **characterized in that** a sludge excess is used relative to the stoichiometry, said excess is removed after the neutralization so as to avoid any solid being present upon reduction in the second step and the unreacted material is recycled in the neutralization step.

7. A method according to claim 6, **characterized in that** the residual solid matters from the neutralization sludge excess are recovered through a settling step after flocculation.

8. A method according to any one of the preceding claims, **characterized in that**, in the second step, the added metal iron is in excess relative to the initial Fe$^{3+}$ amount deriving from the solution resulting from the first step.

9. A method according to claim 8, **characterized in that** the metal iron used in the second step results from turnings, scraps, various iron pieces.

**10.** A method according to any one of preceding claims, **characterized in that** the precipitation of zinc and of most of the impurities with $Na_2S$ or the like in said third step occurs in operating conditions (pH, time, sulphide excess) selected so as to precipitate nearly all the zinc and other heavy metals.

**11.** A method according to claim 10, **characterized in that** the source of sulphides being added in the third step is :

- $H_2S$,
- alkali sulphides such as $Na_2S$, $K_2S$,
- alkali hydrosulphides such as NaHS, KHS,
- alkaline-earth sulphides such as CaS, BaS,
- iron sulphide : FeS,
- polysulphides such as $Na_2S_2$,
- salts based on xanthic acid,
- other organic sulphides.

**12.** A method according to any one of the preceding claims, **characterized in that** zinc and other metals are precipitated at a constant pH ranging from 2 to 3 so as to limit $H_2S$ release, to maximize the yield in the zinc precipitation and to minimize that of the iron, through a slow addition of a $Na_2S$ solution.

Boue fraîche — Bain usé

— M155 5g/l

Figure 1: Flowsheet de traitement des bains usés de décapage

—acide pour pH~0,5

Fe°

**Réduction par fragments de crochets dézingués**
$$2FeCl_3 + Fe \rightarrow 3FeCl_2$$
20 fois la stoechiométrie
1/4 heure
pH final ~ 1

**Neutralisation par boue**
$$3HCl + Fe(OH)_3 \rightarrow FeCl_3 + 3H_2O$$
1,5 fois la stoechiométrie
1 heure
pH final ~ 0,5

HCl pour pH~2,5

**Solution**
~ 130 mg/l $Zn^{++}$
> 120 g/l Fe

Solution $Na_2S$ —

**Précipitation par $Na_2S$**
$$ZnCl_2 + Na_2S \rightarrow ZnS + 2NaCL$$
1.5 fois la stoechiométrie
ajout $Na_2S$ lent (30 à 50 minutes)
3 heures de maturation
pH ~ 2,5

**Gâteau**
30-40% Zn
< 10% Fe

Figure 2 : Influence du temps et de la stoechiométrie sur le pH final de la neutralisation

Figure 3 : Décantation de la boue excédentaire résultant de la neutralisation en une heure
de 250 ml de solution de décapage par la boue d'hydroxyde de fer (essai 137T45)